# EUROPEAN PATENT SPECIFICATION

(11) **EP 2 584 862 B1**
(45) Date of publication and mention of the grant of the patent: **03.06.2015**
(21) Application number: 10853127.8
(22) Date of filing: 15.10.2010
(51) Int. Cl.: H04W 88/02, H04M 1/725, H04W 4/12, H04W 4/14

(54) **METHOD AND TERMINAL FOR PROCESSING SHORT MESSAGE**
VERFAHREN UND ANSCHLUSS FÜR DIE VERARBEITUNG VON KURZNACHRICHTEN
PROCÉDÉ ET TERMINAL PERMETTANT DE TRAITER UN MESSAGE SMS

(30) Priority: 18.06.2010 CN 201010203750
(43) Date of publication of application: 24.04.2013
(73) Proprietor: ZTE Corporation, Shenzhen, Guangdong 518057 (CN)
(72) Inventor: YANG, Cuihong, Shenzhen Guangdong 518057 (CN); PEI, Xiaogang, Shenzhen Guangdong 518057 (CN)
(74) Representative: Zimmermann, Tankred Klaus
(86) International application number: PCT/CN2010/077801
(87) International publication number: WO 2011/157019

(56) References cited:
- EP-A1- 1 804 539
- EP-A1- 1 871 048
- CN-A- 101 098 497
- CN-A- 101 345 945
- CN-A- 101 686 209

## Description

### Field of the Invention

The disclosure relates to the field of mobile communication, and in particular to a method and a terminal for processing short message in an intelligent subscriber identity card.

### Background of the Invention

At present, with the development of mobile communication technology, the short message service has become a popularized service ranked second in frequency of use of all mobile communication services, because of the low expense and convenience in communication. Many value-added services, such as weather forecast and information delivery, of operators are increasingly introduced by taking the advantages of short message.

Therefore, the importance of the function and method of storing the short message to the mobile terminal is self-evident. The memory of mobile terminal itself can store short message. Nonetheless, because a Subscriber Identity Module (SIM) card has the unique feature of being replaceable and pluggable, users prefer to store short message in the SIM card.

According to requirement of the GSM11.11 specification, the structure of the 6F3C file of the currently used SIM cards, which is used for storing short message, is the linear fixed-length file. It means that the record length of each short message of the 6F3C file is fixed. However, in practice, data lengths of short messages are different. If space is reserved for each short message according to a fixed length, then the actually reserved space cannot be fully utilized because of different data length of each short message, thereby reducing the number of short messages actually stored in limited storage space, and inevitably wasting resources.

EP 1871048 and EP 1804539 provide respective technical solutions; however, the above mentioned problem still remains unsolved.

### Summary of the Invention

The disclosure mainly provides a method and a terminal for processing short message, for improving short message storage capacity of the intelligent subscriber identity card, such as the SIM card in mobile terminal to save resources.

According to an aspect of the disclosure, a method for processing short message is provided, comprising steps of:
receiving a short message, and creating an index identifier corresponding to the short message, wherein the index identifier comprises: the index identifier comprises: an index number, an index storage address corresponding to the index number and a data length of a short message corresponding to the index number;
storing the index identifier in a preset index file; and
storing the short message in a preset message file according to the index identifier.

Furthermore, creating the index identifier corresponding to the short message comprises:
searching the index file;
obtaining an index number of the short message and an index storage address of the short message according to the index file; and
obtaining a data length of the short message.

Furthermore, obtaining the index number of the short message and the index storage address of the short message according to the index file comprises:
adding an index number sequentially after a previous index number in the index file to obtain the index number of the short message; and
adding a data length of a short message corresponding to the previous index number to an index storage address corresponding to the previous index number to obtain the index storage address of the short message.

Furthermore, storing the short message in the preset message file according to the index identifier comprises:
searching the message file;
shifting forward in the message file by the index storage address of the short message in the index identifier; and
storing the short message in the message file according to the index storage address of the short message.

Furthermore, after storing the short message in the preset message file according to the index identifier, the method further comprises:
searching, according to an index number of a short message to be deleted, for a corresponding index storage address and a corresponding data length of the short message in the index file;
deleting, in the message file, bytes of the corresponding data length of the short message at the corresponding index storage address; and
deleting the corresponding index storage address and the corresponding data length of the short message in the index file.

Furthermore, after deleting the corresponding index storage address and the corresponding data length of the short message in the index file, the method further comprises:
after the short message to be deleted is deleted, shifting an address of a short message after the deleted short message backward by the data length of the deleted short message;
shifting backward the index number of the deleted short message in the index file

According to another aspect of the disclosure, a terminal for processing short message is provided, which comprises:
a receiving module, configured to receive a short message;
a creating module, configured to create an index identifier corresponding to the short message, wherein the index identifier comprises: the index identifier comprises: an index number, an index storage address corresponding to the index number and a data length of a short message corresponding to the index number; and
a storing module, configured to store the index identifier in a preset index file, and store the short message in a preset message file according to the index identifier.

Furthermore, the creating module comprises:
a first searching unit, configured to search the index file; and
an obtaining unit, configured to obtain an index number of the short message and an index storage address of the short message according to the index file, and obtain a data length of the short message.

Furthermore, the obtaining unit comprises:
an index number obtaining subunit, configured to sequentially add an index number after a previous index number in the index file to obtain the index number of the short message; and
an index storage address obtaining subunit, configured to add a data length of a short message corresponding to the previous index number to an index storage address corresponding to the previous index number to obtain the index storage address of the short message.

Furthermore, the storing module comprises:
a second searching unit, configured to search the message file;
an shifting subunit, configured to shift forward in the message file by the index storage address of the short message in the index identifier; and
a storing subunit, configured to store the short message in the message file according to the index storage address of the short message.

Furthermore, the terminal further comprises:
a searching module, configured to search, according to an index number of a short message to be deleted, for a corresponding index storage address and a corresponding data length of the short message in the index file,; and
a deleting module, configured to delete, in the message file, bytes of the corresponding data length of the short message at the corresponding index storage address, and delete the corresponding index storage address and the corresponding data length of the short message in the index file.

Furthermore, the shifting subunit is further configured to, after the short message to be deleted is deleted, shift an address of a short message after the deleted short message backward by the data length of the deleted short message, and shift backward the index number of the deleted short message in the index file

The method and terminal for processing short message of the disclosure store the short message in storage space of mobile terminal according to the actual data length of the short message, and delete the short message from storage space of mobile terminal according to the actual data length of the short message. Thereby, the disclosure can store as many short messages as possible in the limited storage space. The disclosure improves the utilization ratio of the storage space of mobile terminal, saves resources, and provides convenience for manufactures and users of mobile terminal.

### Brief Description of the Drawings

The drawings described herein are used for providing a further understanding of the disclosure, and constitute a part of the application. The schematic embodiments of the disclosure and the description thereof are used for illustrating the disclosure and are not intended to form improper limit to the disclosure. In the drawings:
Fig. 1 shows a flowchart of an embodiment of a method for processing short message of the disclosure;
Fig. 2 shows a specific flowchart of the process of creating the index identifier corresponding to the short message in the method for processing short message shown in Fig. 1;
Fig. 3 shows a specific flowchart of the process of obtaining the index number of the short message and the index storage address of the short message according to the index file in the method for processing short message shown in Fig. 2;
Fig. 4 shows a specific flowchart of the process of storing the short message in the preset message file according to the index identifier in the method for processing short message shown in Fig. 1;
Fig. 5 shows a flowchart of another embodiment of the method for processing short message of the disclosure;
Fig. 6 shows a structure diagram of an embodiment of the terminal for processing short message of the disclosure;
Fig. 7 shows a specific structure diagram of the creating module of the terminal for processing short message shown in Fig. 6;
Fig. 8 shows a specific structure diagram of the obtaining unit in the creating module of the terminal for processing short message shown in Fig. 7;
Fig. 9 shows a specific structure diagram of the storing module of the terminal for processing short message shown in Fig. 6; and
Fig. 10 shows a structure diagram of another embodiment of the terminal for processing short message of the disclosure.

### Detailed Description of the Embodiments

It should be noted that the embodiments and features in the embodiments in the application can be combined with each other if not conflicting. The disclosure is described hereinafter in detail with reference to the drawings and embodiments.

In the related art, the short messages are stored in the file 6F3C in the directory 7F10 of the SIM card, wherein the file is named EFSMS, the file identifier is 6F3C, and the file structure is of the linear fixed-length type. The length of each record of the short message is 176 bytes, the storage limit of records is 255, and each short message occupies one record length fixedly. If a short message only has a length of 60 bytes, then the short message wastes space of 176 - 60 = 16 bytes. If all the records are added up, more space is wasted. When the last one is to be stored, it is possible that it may not be stored, even there is space left.

The solution of embodiments of the disclosure is mainly: in mobile terminal, storing the received short message according to the actual data length of the short message, so as to improve the utilization ratio of storage space of the mobile terminal.

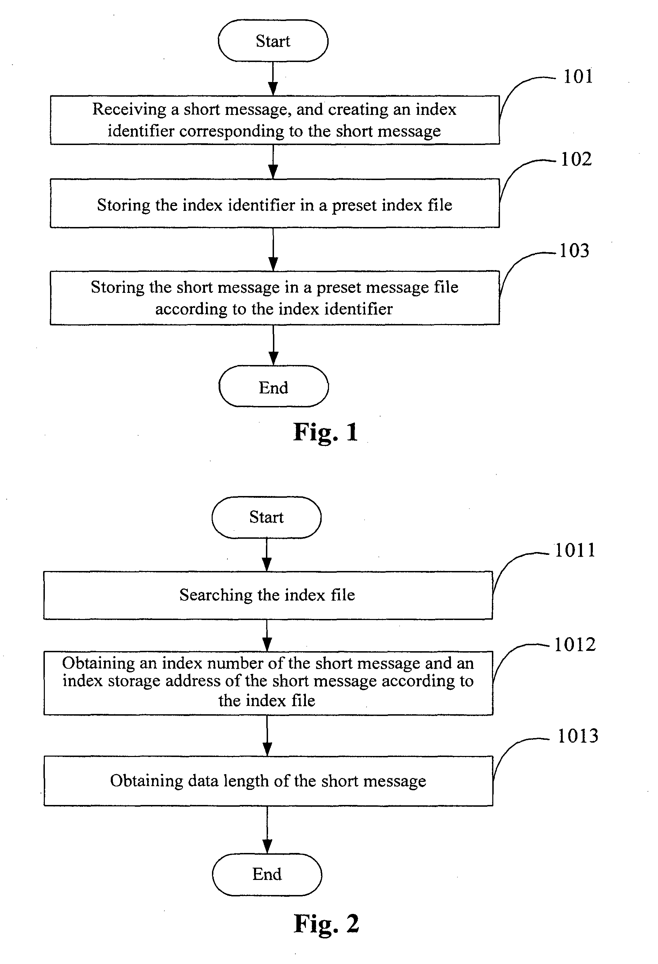

As shown in Fig. 1, an embodiment of the disclosure provides a method for processing short message, which comprises:
Step 101: receiving the short message, and creating the index identifier corresponding to the short message;
Step 102: storing the index identifier in the preset index file; and
Step 103: storing the short message in the preset message file according to index identifier.

In the embodiment, the SIM card is taken as the example. When the mobile terminal stores the short message through the SIM card, first the message file for storing the short message is created in the SIM card, and the index file for storing the index identifier corresponding to the short message is created, wherein the index identifier comprises: the index number of the short message, the index storage address corresponding to the index number and the data length of the short message corresponding to the index number. That is to say, the index identifiers corresponding to different short messages are stored in the index file.

When a new short message is to be stored in the SIM card, first an index number is obtained by sequentially adding an index number after the previous index number, and then the data length of the short message corresponding to the previous index number is added in the index storage address corresponding to the previous index number in the index file to obtain the index storage address corresponding to this index number. At the same time, the data length of the new short message is recorded in the index file. Then, according to the calculated index storage address of the new short message, it shifts in the message file to this index storage address, and the data content of the short message is stored at the index storage address. In this case, in the SIM card, an initial index storage address is assigned to the index file by a SIM card processor, then a shifting amount of address is calculated according to the length occupied by each short message data. Each short message is correspondingly stored in the message file.

Preferably, as shown in Fig. 2, creating the index identifier corresponding to the short message in step 101 can further comprise:
Step 1011: searching the index file;
Step 1012: obtaining the index number of the short message and the index storage address of the short message according to the index file; and
Step 1013: obtaining the data length of the short message.

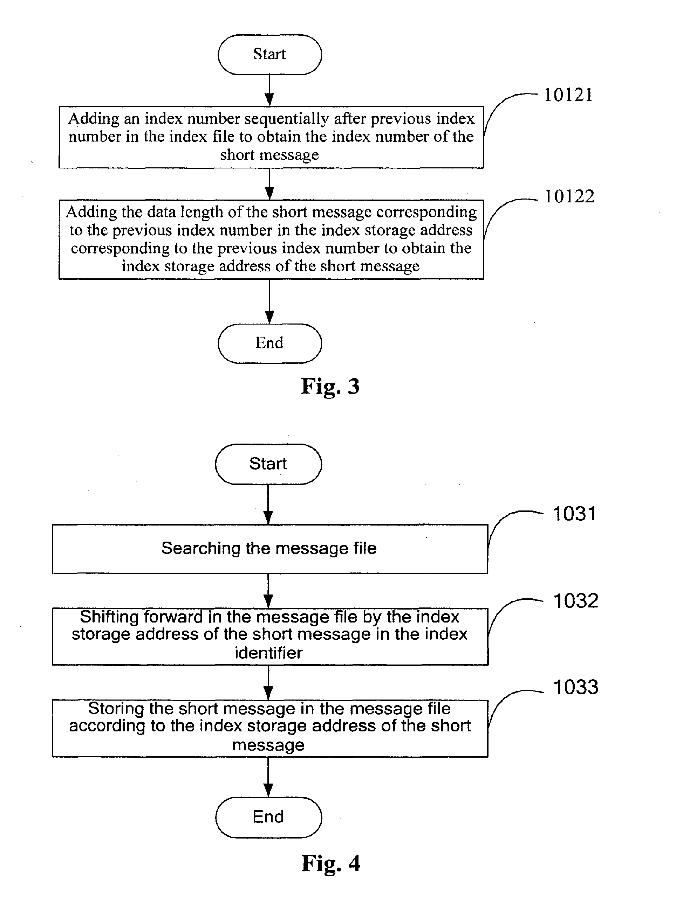

Preferably, as shown in Fig. 3, step 1012 can further comprise:
Step 10121: adding an index number sequentially after the previous index number in the index file to obtain the index number of the short message; and
Step 10122: adding the data length of the short message corresponding to the previous index number in the index storage address corresponding to the previous index number to obtain the index storage address of the short message.

Preferably, as shown in Fig. 4, step 103 can further comprise:
Step 1031: searching the message file;
Step 1032: shifting in the message file to the index storage address of the short message in the index identifier; and
Step 1033: storing the short message in the message file according to the index storage address of the short message.

The process of storing the short message of the embodiment is illustrated below with specific examples.

In order to distinguish from the related *EF_{SMS}* file, the embodiment names the message file *EF_{EXT_SMS}*. The file identifier can be, for instance, 6F8C. The storage location of file can be, for instance, in the directory 7F10 too. The file structure of *EF_{EXT_SMS}* is of transparent type. Size of the *EF_{EXT_SMS}* file is reasonably set according to the actual capacity of the SIM card. The description herein takes the example of 50k bytes. The received short messages are stored one by one, according to actual size.

In the embodiment, the index file for storing the index identifier can be named *EF_{SMS_INDEX}*, and the file identifier can be, for instance, 6F8D. It only needs to be distinguished from all other related files in the SIM card. The storage location of the file can be, for instance, in the directory 7F10 too. In this case, the file structure of *EF_{SMS_INDEX}* is of linear fixed-length type. Size of the *EF_{SMS_INDEX}* file is reasonably set according to actual capacity of the SIM card. Each record, namely each index identifier of the *EF_{SMS_INDEX}* file sequentially comprises three parts: the index number, the index storage address of the short message in the *EF_{EXT_SMS}* file corresponding to the index number, and the data length of the short message corresponding to the index number, namely the data byte length of the short message corresponding to the index number.

It is assumed that there are three index records, namely three index identifiers, in the *EF_{SMS_INDEX}* file. Storage address of the short message 1 corresponding to the index number 1 starts from 0x0, and byte length of the short message 1 is 0x20 bytes. The short message 2 corresponding to the index number 2 is stored after the short message 1. Storage address of the short message 2 starts from 0x0020, and byte length of the short message 2 is 0x55 bytes. The short message 3 corresponding to the index number 3 is stored after the short message 2. Storage address of the short message 3 starts from 0x0075, and byte length of the short message 3 is 0x32 bytes. The three short messages are correspondingly stored in the *EF_{EXT_SMS}* file.

When a new short message is received and is to be stored, an index number which is 4 is added in the *EF_{SMS_INDEX}* file. The newly added short message is named the short message 4. Then, the data length 0x32 of the short message corresponding to the index number 3 is added to the index storage address corresponding to the previous index number, namely storage address 0x0075 of the short message 3 corresponding to the index number 3, to obtain the index storage address 0x0075+0x32=0x0107 corresponding to the index number 4. At the same time, the length of the new short message 4 is recorded in the *EF_{SMS_INDEX}* file, supposing that length of the short message 4 is 0x16. Then, according to the calculated index storage address 0x0107 of the new short message 4, it shifts in the *EF_{EXT_SMS}* file to the index storage address. That is, the data content of the new short message 4 is stored from 0x0107.

It should be noted that, the method for processing short message of the embodiment can be compatible with related SIM cards and mobile terminals. In above example, when using related SIM cards and mobile terminals to store the short message, corresponding record number of the corresponding short message in the file 6F3C can be added in the index identifiers of the index file *EF_{EXT_SMS}.* When the short message 4 is stored in the *EF_{EXT_SMS}* file successfully, a synchronized mode can be adopted to select a record number which is not occupied in the *EF_{SMS}* file of the related art to store the short message 4, and the corresponding record number of the *EF_{SMS}* file is stored in the *EF_{EXT_SMS}* file. Therefore, the method for storing short message of the embodiment can be used in related SIM cards and mobile terminals, for achieving the purpose of being compatible.

Furthermore, it should be noted that the method of copy of short message performed by the embodiment through mobile terminal is same as the method for storing short message introduced in the embodiment. Thus, no repeated description is given here.

The embodiment stores the short message in storage space of mobile terminal according to the actual data length of the short message, which breaks the limitation in the related art that the short message file is stored according to fixed length. The present solution efficiently utilizes storage space of the SIM card used in mobile terminal, stores as many short messages as possible in limited storage space, improves the utilization ratio of storage space of mobile terminal, saves resources, and provides convenience for manufactures and users of mobile terminals. Furthermore, the method for processing short message of the embodiment can be compatible with related SIM cards and mobile terminals, and related SIM cards and mobile terminals can still perform processes, such as storage of short messages, using the 6F3C file structure as usual.

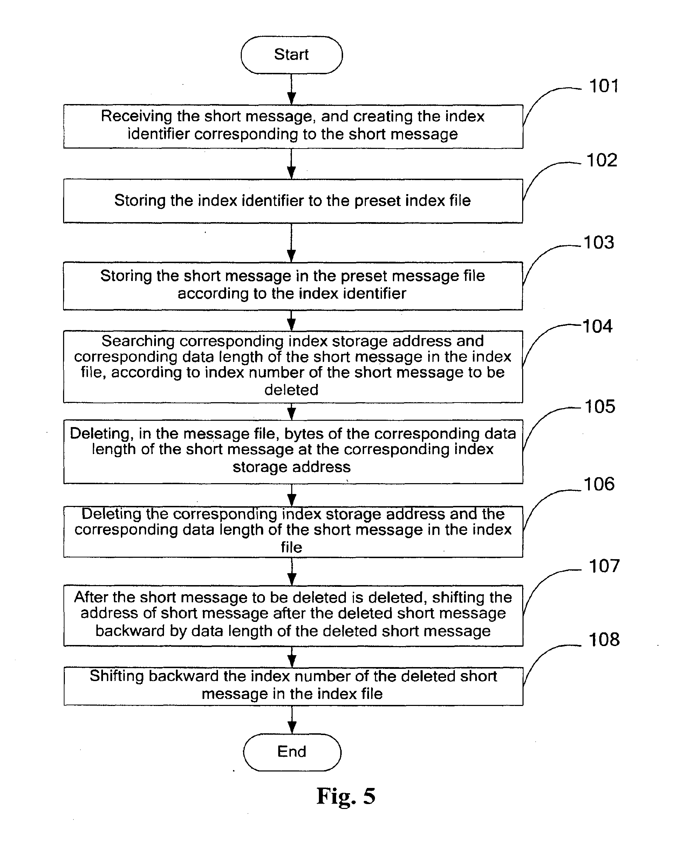

As shown in Fig. 5, another embodiment of the disclosure provides a method for processing short message. Based on the above embodiment, after step 103, the method can further comprise:
Step 104: searching for the corresponding index storage address and the data length of the corresponding short message in the index file, according to the index number of the short message to be deleted;
Step 105: deleting, from the message file, bytes of the data length of the corresponding short message at the corresponding index storage address;
Step 106: deleting the corresponding index storage address and the data length of the corresponding short message from the index file;
Step 107: after the short message to be deleted is deleted, shifting the address of short message after the deleted short message backward by the data length of the deleted short message; and
Step 108: shifting backward the index number of the deleted short message in the index file.

The embodiment stores the short message in storage space of mobile terminal according to the actual data length of the short message. Based on that, the embodiment can perform process of deletion of the short message. This solution breaks the limitation in the related art that the short message file is stored according to fixed length, efficiently utilizes storage space of the SIM card used in mobile terminal, stores as many short messages as possible in limited storage space, improves the utilization ratio of storage space of mobile terminal, saves resources, and provides convenience for manufactures and users of mobile terminals. Furthermore, the method for processing short message of the embodiment can be compatible with related SIM cards and mobile terminals, and related SIM cards and mobile terminals can still perform processes, such as storage of short message, using the 6F3C file structure as usual.

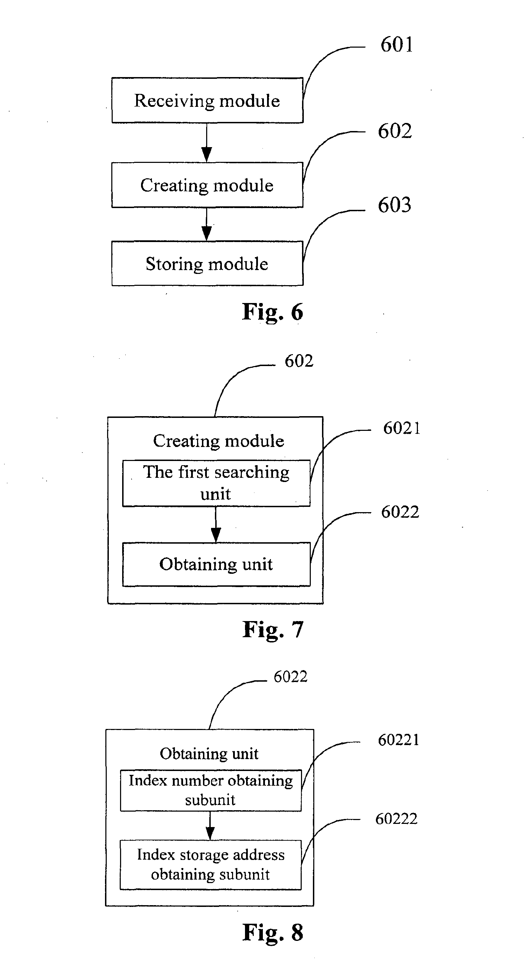

As shown in Fig. 6, an embodiment of the disclosure provides a terminal for processing short message, which can comprise:
a receiving module 601, configured to receive the short message;
a creating module 602, configured to create the index identifier corresponding to the short message; and
a storing module 603, configured to store the index identifier in the preset index file, and store the short message in the preset message file according to the index identifier.

Preferably, as shown in Fig. 7, the creating module 602 can further comprise:
a first searching unit 6021, configured to search the index file; and
an obtaining unit 6022, configured to obtain the index number of the short message and the index storage address of the short message according to the index file, and obtain the data length of the short message.

Preferably, as shown in Fig. 8, the obtaining unit 6022 can further comprise:
an index number obtaining subunit 60221, configured to sequentially add an index number after the previous index number in the index file to obtain the index number of the short message; and
an index storage address obtaining subunit 60222, configured to add the data length of the short message corresponding to the previous index number in the index storage address corresponding to the previous index number to obtain the index storage address of the short message.

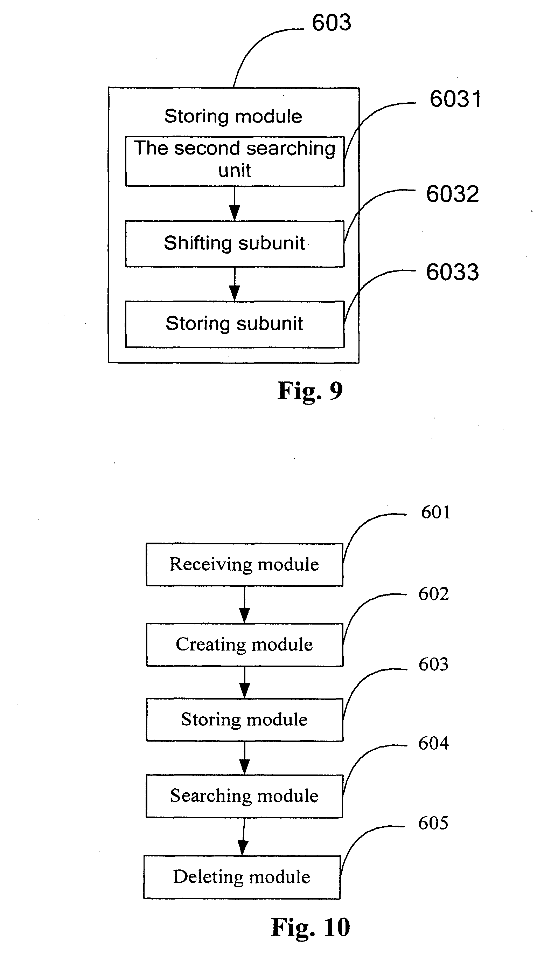

Preferably, as shown in Fig. 9, the storing module 603 can further comprise:
a second searching unit 6031, configured to search the message file;
a shifting subunit 6032, configured to shift in the message file to the index storage address of the short message in the index identifier; and
a storing subunit 6033, configured to store the short message in the message file according to the index storage address of the short message.

Preferably, as shown in Fig. 10, another embodiment of the disclosure provides a terminal for processing short message. Based on above embodiment, the terminal can further comprise:
a searching module 604, configured to search for the corresponding index storage address and the data length of the corresponding short message in the index file, according to the index number of the short message to be deleted; and
a deleting module 605, configured to delete, from the message file, bytes of the data length of the corresponding short message at the corresponding index storage address, and delete the corresponding index storage address and the data length of the corresponding short message from the index file.

Furthermore, the shifting subunit 6032 is further configured to, after the short message to be deleted is deleted, shift addresses of short messages after the deleted short message backward by the data length of the deleted short message, and shift backward the index number of the deleted short message in the index file.

It should be noted that the terminal of the embodiment can be the intelligent subscriber identity card with functions of storing short message, comprising SIM card, UIM card, USIM card or PIM card and so on.

The embodiment of the disclosure performs processes, such as storage, deletion and copy, to the short message in storage space of mobile terminal according to the actual data length of the short message, and stores as many short messages as possible in limited storage space. Thereby, this solution breaks the limitation in the related art that the short message file is stored according to fixed length, efficiently utilizes storage space of the SIM card used in mobile terminal, stores as many short messages as possible in limited storage space, improves the utilization ratio of storage space of mobile terminal, saving resources, and provides convenience for manufactures and users of mobile terminals. Furthermore, the method for processing short message of the embodiment can be compatible with related SIM cards and mobile terminals, and related SIM cards and mobile terminals can still perform processes, such as storage, deletion and copy, to the short message using the 6F3C file structure as usual.

The above is only the preferred embodiments of the disclosure and not intended to limit the scope of the claims of the disclosure. Any equivalent replacements of structure or flow based on the contents of the specification and the drawings of the disclosure, and any direct or indirect application of the disclosure in other related technical fields shall fall within the scope of the claims of the disclosure.

## Claims

1. A method for processing short message, **characterized by** comprising:
receiving (101) a short message, and creating an index identifier corresponding to the short message, wherein the index identifier comprises: an index number, an index storage address of the short message corresponding to the index number and a data length of the short message corresponding to the index number;
storing (102) the index identifier in a preset index file; and
storing (103) the short message in a preset message file:according to the index identifier.

2. The method according to claim 1 **characterized in that** the step of creating the index identifier corresponding to the short message comprises:
searching (1011) the index file;
obtaining (1012) an index number of the short message and an index storage address of the short message according to the index file; and
obtaining (1013) a data length of the short message.

3. The method according to claim 2, **characterized in that** the step of obtaining (1012) the index number of the short message and the index storage address of the short message according to the index file comprises:
adding (10121) an index number sequentially after a previous index number in the index file to obtain the index number of the short message; and
adding (10122) a data length of a short message corresponding to the previous index number to an index storage address corresponding to the previous index number to obtain the index storage address of the short message.

4. The method according to claim 3, **characterized in that** the step of storing (103) the short message in the preset message file according to the index identifier comprises:
searching (1031) the message file;
shifting (1032) in the message file to the index storage address of the short message in the index identifier; and
storing (1033) the short message in the message file according to the index storage address of the short message.

5. The method according to claim 3 or 4, **characterized in that** after the step of storing (103) the short message in the preset message file according to the index identifier, the method further comprises:
searching (104), according to an index number of a short message to be deleted, for a corresponding index storage address and a data length of the corresponding short message in the index file;
deleting (105), from the message file, bytes of the data length of the corresponding short message at the corresponding index storage address; and
deleting (106), from the index file, the corresponding index storage address and the data length of the corresponding short message.

6. The method according to claim. 5, **characterized in that** after the step of deleting (106) from the index file the corresponding index storage address and the data length of the corresponding short message, the method further comprises:
after the short message to be deleted is deleted, shifting (107) an address of a short message after the deleted short message backward by the data length of the deleted short message;
shifting (108) backward the index number of the deleted short message in the index file.

7. A terminal for processing short message, **characterized by** comprising:
a receiving module (601), configured to receive a short message;
a creating module (602), configured to create an index identifier corresponding to the short message, wherein the index identifier comprises: an index number, an index storage address of the short message corresponding to the index number and a data length of the short message corresponding to the index number; and
a storing module (603), configured to store the index identifier in a preset index file, and store the short message in a preset message file according to the index identifier.

8. The terminal according to claim 7, **characterized in that** the creating module (602) comprises:
a first searching unit (602), configured to search the index file; and
an obtaining unit (6022), configured to obtain an index number of the short message and an index storage address of the short message according to the index file, and obtain a data length of the short message

9. The terminal according to claim 8, **characterized in that** the obtaining unit (6022) comprises:
an index number obtaining subunit (60221), configured to sequentially add an index number after a previous index number in the index file to obtain the index number of the short message; and
an index storage address obtaining subunit (60222), configured to add a data length of a short message corresponding to the previous index number to an index storage address corresponding to the previous index number to obtain the index storage address of the short message.

10. The terminal according to claim 7, 8 or 9, **characterized in that** the storing module (603) comprises:
a second searching unit (6031), configured to search the message file;
an shifting subunit (6032), configured to shift in the message file to the index storage address of the short message in the index identifier; and
a storing subunit (6033), configured to store the short message in the message file according to the index storage address of the short message.

11. The terminal according to claim 10, **characterized by** further comprising:
a searching module (604), configured to search, according to an index number of a short message to be deleted, for a corresponding index storage address and a data length of the corresponding short message in the index file,; and
a deleting module (605), configured to delete, from the message file, bytes of the data length of the corresponding short message at the corresponding index storage address, and delete the corresponding index storage address and the data length of corresponding the short message from the index file.

12. The terminal according to claim 11, **characterized in that** the shifting subunit is further configured to, after the short message to be deleted is deleted, shift an address of a short message after the deleted short message backward by the data length of the deleted short message, and shift backward the index number of the deleted short message in the index file.

## Patentansprüche

1. Ein Verfahren zum Verarbeiten einer Kurznachricht, das **dadurch gekennzeichnet ist, dass** es folgende Schritte aufweist:
Empfangen (101) einer Kurznachricht und Erzeugen eines Indexidentifizierers, der der Kurznachricht entspricht, wobei der Indexidentifizierer folgende Merkmale aufweist: eine Indexzahl, eine Indexspeicheradresse der Kurznachricht, die der Indexzahl entspricht, und eine Datenlänge der Kurznachricht, die der Indexzahl entspricht;
Speichern (102) des Indexidentifizierers in einer voreingestellten Indexdatei; und
Speichern (103) der Kurznachricht in einer voreingestellten Nachrichtendatei gemäß dem Indexidentifizierer.

2. Das Verfahren gemäß Anspruch 1, das **dadurch gekennzeichnet ist, dass** der Schritt des Erzeugens des Indexidentifizierers, der der Kurznachricht entspricht, folgende Schritte aufweist:
Suchen (1011) der Indexdatei;
Erhalten (1012) einer Indexzahl der Kurznachricht und einer Indexspeicheradresse der Kurznachricht gemäß der Indexdatei; und
Erhalten (1013) einer Datenlänge der Kurznachricht.

3. Das Verfahren gemäß Anspruch 2, das **dadurch gekennzeichnet ist, dass** der Schritt des Erhaltens (1012) der Indexzahl der Kurznachricht und der Indexspeicheradresse der Kurznachricht gemäß der Indexdatei folgende Schritte aufweist:
sequentielles Hinzufügen (10121) einer Indexzahl nach einer vorherigen Indexzahl in der Indexdatei, um die Indexzahl der Kurznachricht zu erhalten; und
Hinzufügen (10122) einer Datenlänge einer Kurznachricht, die der vorherigen Indexzahl entspricht, zu einer Indexspeicheradresse, die der vorherigen Indexzahl entspricht, um die Indexspeicheradresse der Kurznachricht zu erhalten.

4. Das Verfahren gemäß Anspruch 3, das **dadurch gekennzeichnet ist, dass** der Schritt des Speicherns (103) der Kurznachricht in der voreingestellten Nachrichtendatei gemäß dem Indexidentifizierer folgende Schritte aufweist:
Suchen (1031) der Nachrichtendatei;
Verschieben (1032) in der Nachrichtendatei zu der Indexspeicheradresse der Kurznachricht in dem Indexidentifizierer; und
Speichern (1033) der Kurznachricht in der Nachrichtendatei gemäß der Indexspeicheradresse der Kurznachricht.

5. Das Verfahren gemäß Anspruch 3 oder 4, das **dadurch gekennzeichnet ist, dass** das Verfahren nach dem Schritt des Speicherns (103) der Kurznachricht in der voreingestellten Nachrichtendatei gemäß dem Indexidentifizierer ferner folgende Schritte aufweist:
Suchen (104), gemäß einer Indexzahl einer Kurznachricht, die gelöscht werden soll, nach einer entsprechenden Indexspeicheradresse und einer Datenlänge der entsprechenden Kurznachricht in der Indexdatei;
Löschen (105) von Bytes der Datenlänge der entsprechenden Kurznachricht an der entsprechenden Indexspeicheradresse aus der Nachrichtendatei; und
Löschen (106) der entsprechenden Indexspeicheradresse und der Datenlänge der entsprechenden Kurznachricht aus der Indexdatei.

6. Das Verfahren gemäß Anspruch 5, das **dadurch gekennzeichnet ist, dass** das Verfahren nach dem Schritt des Löschens (106) der entsprechenden Indexspeicheradresse und der Datenlänge der entsprechenden Kurznachricht aus der Indexdatei ferner folgende Schritte aufweist:
nachdem die Kurznachricht, die gelöscht werden soll, gelöscht ist, Verschieben (107) einer Adresse einer Kurznachricht nach der gelöschten Kurznachricht um die Datenlänge der gelöschten Kurznachricht nach hinten;
Verschieben (108) der Indexzahl der gelöschten Kurznachricht in der Indexdatei nach hinten.

7. Ein Endgerät zum Verarbeiten einer Kurznachricht, das **dadurch gekennzeichnet ist, dass** es folgende Merkmale aufweist:
ein Empfangsmodul (601), das ausgebildet ist, um eine Kurznachricht zu empfangen;
ein Erzeugungsmodul (602), das ausgebildet ist, um einen Indexidentifizierer, der der Kurznachricht entspricht, zu erzeugen, wobei der Indexidentifizierer folgende Merkmale aufweist: eine Indexzahl, eine Indexspeicheradresse der Kurznachricht, die der Indexzahl entspricht, und eine Datenlänge der Kurznachricht, die der Indexzahl entspricht; und
ein Speichermodul (603), das ausgebildet ist, um den Indexidentifizierer in einer voreingestellten Indexdatei zu speichern und die Kurznachricht in einer voreingestellten Nachrichtendatei gemäß dem Indexidentifizierer zu speichern.

8. Das Endgerät gemäß Anspruch 7, das **dadurch gekennzeichnet ist, dass** das Erzeugungsmodul (602) folgende Merkmale aufweist:
eine erste Sucheinheit (6021), die ausgebildet ist, um die Indexdatei zu suchen; und
eine Erhalteeinheit (6022), die ausgebildet ist, um eine Indexzahl der Kurznachricht und eine Indexspeicheradresse der Kurznachricht gemäß der Indexdatei zu erhalten und eine Dafienlänge der Kurznachricht zu erhalten.

9. Das Endgerät gemäß Anspruch 8, das **dadurch gekennzeichnet ist, dass** die Erhalteeinheit (6022) folgende Merkmale aufweist:
eine Indexzahlerhalte-Untereinheit (60221), die ausgebildet ist, um sequentiell eine Indexzahl nach einer vorherigen Indexzahl in der Indexdatei hinzuzufügen, um die Indexzahl der Kurznachricht zu erhalten; und
eine Indexspeicheradressenerhalte-Untereinheit (60222), die ausgebildet ist, um eine Datenlänge einer Kurznachricht, die der vorherigen Indexzahl entspricht, zu einer Indexspeicheradresse, die der vorherigen Indexzahl entspricht, hinzuzufügen, um die Indexspeicheradresse der Kurznachricht zu erhalten.

10. Das Endgerät gemäß Anspruch 7, 8 oder 9, das **dadurch gekennzeichnet ist, dass** das Speichermodul (603) folgende Merkmale aufweist:
eine zweite Sucheinheit (6031), die ausgebildet ist, um die Nachrichtendatei zu suchen;
eine Verschiebe-Untereinheit (6032), die ausgebildet ist, um in der Nachrichtendatei zu der Indexspeicheradresse der Kurznachricht in dem Indexidentifizierer zu verschieben; und
eine Speicher-Untereinheit (6033), die ausgebildet ist, um die Kurznachricht in der Nachrichtendatei gemäß der Indexspeicheradresse der Kurznachricht zu speichern.

11. Das Endgerät gemäß Anspruch 10, das **dadurch gekennzeichnet ist, dass** es ferner folgende Merkmale aufweist:
ein Suchmodul (604), das ausgebildet ist, um gemäß einer Indexzahl einer Kurznachricht, die gelöscht werden soll, nach einer entsprechenden Indexspeicheradresse und einer Datenlänge der entsprechenden Kurznachricht in der Indexdatei zu suchen; und
ein Löschmodul (605), das ausgebildet ist, um aus der Nachrichtendatei Bytes der Datenlänge der entsprechenden Kurznachricht an der entsprechenden Indexspeicheradresse zu löschen und die entsprechende Indexspeicheradresse und die Datenlänge der entsprechenden Kurznachricht aus der Indexdatei zu löschen.

12. Das Endgerät gemäß Anspruch 11, das ferner **dadurch gekennzeichnet ist, dass**:
die Verschiebe-Untereinheit ferner ausgebildet ist, um, nachdem die Kurznachricht, die gelöscht werden soll, gelöscht ist, eine Adresse einer Kurznachricht nach der gelöschten Kurznachricht um die Datenlänge der gelöschten Kurznachricht nach hinten zu verschieden und die Indexzahl der gelöschten Kurznachricht in der Indexdatei nach hinten zu verschieben.

## Revendications

1. Procédé permettant de traiter un message court, **caractérisé par le fait qu'**il comprend le fait de:
recevoir (101) un message court, et créer un identificateur d'index correspondant au message court, où l'identificateur d'index comprend: un numéro d'index, une adresse de mémorisation d'index du message court correspondant au numéro d'index et une longueur de données du message court correspondant au numéro d'index;
mémoriser (102) l'identificateur d'index dans un fichier d'index préétabli; et
mémoriser (103) le message court dans un fichier de messages préétabli selon l'identificateur d'index.

2. Procédé selon la revendication 1, **caractérisé par le fait que** l'étape consistant à créer l'identificateur d'index correspondant au message court comprend le fait de:
rechercher (1011) le fichier d'index;
obtenir (1012) un numéro d'index du message court et une adresse de mémorisation d'index du message court selon le fichier d'index; et
obtenir (1013) une longueur de données du message court.

3. Procédé selon la revendication 2, **caractérisé par le fait que** l'étape consistant à obtenir (1012) le numéro d'index du message court et l'adresse de mémorisation d'index du message court selon le fichier d'index comprend le fait de:
ajouter (10121) en séquence un numéro d'index après un numéro d'index précédent dans le fichier d'index, pour obtenir le numéro d'index du message court; et
ajouter (10122) une longueur de données d'un message court correspondant au numéro d'index précédent à une adresse de mémorisation d'index correspondant au numéro d'index précédent, pour obtenir l'adresse de mémorisation d'index du message court.

4. Procédé selon la revendication 3, **caractérisé par le fait que** l'étape consistant à mémoriser (103) le message court dans le fichier de message préétabli selon l'identificateur d'indice comprend le fait de:
rechercher (1031) le fichier de messages;
déplacer (1032) dans le fichier de messages vers l'adresse de mémorisation d'index de message court dans l'identificateur d'index; et
mémoriser (1033) le message court dans le fichier de messages selon l'adresse de mémorisation d'index du message court.

5. Procédé selon la revendication 3 ou 4, **caractérisé par le fait qu'**après l'étape de mémorisation (103) du message court dans le fichier de messages prédéfini selon l'identificateur d'index, le procédé comprend par ailleurs le fait de:
rechercher (104), selon un numéro d'index d'un message court à supprimer, une adresse de mémorisation d'index correspondante et une longueur de données du message court correspondant dans le fichier d'index;
supprimer (105), du fichier de messages, des octets de la longueur de données du message court correspondant à l'adresse de mémorisation d'index correspondante; et
supprimer (106) du fichier d'index l'adresse de mémorisation d'index correspondante et la longueur de données du message court correspondant.

6. Procédé selon la revendication 5, **caractérisé par le fait qu'**après l'étape consistant à supprimer (106) du fichier d'index l'adresse de mémorisation d'index correspondante et la longueur de données du message court correspondant, le procédé comprend par ailleurs le fait de:
après que le message court à supprimer soit supprimé, déplacer (107) une adresse d'un message court après le message court supprimé en arrière de la longueur de données du message court supprimé;
déplacer (108) en arrière le numéro d'index du message court supprimé dans le fichier d'index.

7. Terminal permettant de traiter un message court, **caractérisé par le fait qu'**il comprend:
un module de réception (601), configuré pour recevoir un message court;
un module de création (602), configuré pour créer un identificateur d'index correspondant au message court, où l'identificateur d'indice comprend: un numéro d'index, une adresse de mémorisation d'index du message court correspondant au numéro d'index et une longueur de données du message court correspondant au numéro d'index; et
un module de mémorisation (603), configuré pour mémoriser l'identificateur d'index dans un fichier d'index préétabli, et pour mémoriser le message court dans un fichier de messages préétabli selon l'identificateur d'index.

8. Terminal selon la revendication 7, **caractérisé par le fait que** le module de création (602) comprend:
une première unité de recherche (6021), configurée pour rechercher le fichier d'index; et
une unité d'obtention (6022), configurée pour obtenir un numéro d'index du message court et une adresse de mémorisation d'index du message court selon le fichier d'index, et pour obtenir une longueur de données du message court.

9. Terminal selon la revendication 8, **caractérisé par le fait que** l'unité d'obtention (6022) comprend:
une sous-unité d'obtention de numéro d'index (60221), configurée pour ajouter en séquence un numéro d'index après un numéro d'index précédent dans le fichier d'index, pour obtenir le numéro d'index du message court; et
une sous-unité d'obtention d'adresse de mémorisation d'index (60222), configurée pour ajouter une longueur de données d'un message court correspondant au numéro d'index précédent à une adresse de mémorisation d'index correspondant au numéro d'index précédent, pour obtenir l'adresse de mémorisation d'index du message court.

10. Terminal selon la revendication 7, 8 ou 9, **caractérisé par le fait que** le module de mémorisation (603) comprend:
une deuxième unité de recherche (6031), configurée pour rechercher le fichier de messages;
une sous-unité de déplacement (6032), configurée pour déplacer dans le fichier de messages vers l'adresse de mémorisation d'index du message court dans l'identificateur d'index; et
une sous-unité de mémorisation (6033), configurée pour mémoriser le message court dans le fichier de messages selon l'adresse de mémorisation d'index du message court.

11. Terminal selon la revendication 10, **caractérisé par le fait qu'**il comprend par ailleurs:
un module de recherche (604), configuré pour rechercher, selon un numéro d'index d'un message court à supprimer, une adresse de mémorisation d'index correspondante et une longueur de données du message court correspondant dans le fichier d'index; et
un module de suppression (605), configuré pour supprimer du fichier de messages des octets de la longueur de données du message court correspondant à l'adresse de mémorisation d'index correspondante, et pour supprimer l'adresse de mémorisation d'index correspondante et la longueur de données du message court correspondant du fichier d'index.

12. Terminal selon la revendication 11, **caractérisé par le fait que** la sous-unité de déplacement est par ailleurs configurée pour, après que le message court à supprimer soit supprimé, déplacer l'adresse d'un message court après le message court supprimé en arrière de la longueur de données du message court supprimé, et pour déplacer vers l'arrière le numéro d'index du message court supprimé dans le fichier d'index.
